Europäisches Patentamt

**European Patent Office**

Office européen des brevets

(11) Numéro de publication: **0 182 708**
**B1**

(12) **FASCICULE DE BREVET EUROPEEN**

(45) Date de publication du fascicule du brevet:
01.03.89

(51) Int. Cl.⁴: **B 67 C 7/00,** B 65 G 19/02

(21) Numéro de dépôt: **85402186.2**

(22) Date de dépôt: **12.11.85**

(54) **Dispositif de transport d'objets entre deux stations de traitement, en particulier de remplissage et de bouchage de bouteilles.**

(30) Priorité: **13.11.84 FR 8417270**

(43) Date de publication de la demande:
**28.05.86 Bulletin 86/22**

(45) Mention de la délivrance du brevet:
**01.03.89 Bulletin 89/9**

(84) Etats contractants désignés:
**AT CH DE GB IT LI**

(56) Documents cités:
**DE-A- 3 044 597**
**FR-A- 1 087 995**
**FR-A- 2 370 682**
**US-A- 2 484 101**

(73) Titulaire: **Bedin, Jean, 251, rue Camille Godard, F-33000 Bordeaux (FR)**

(72) Inventeur: **Bedin, Jean, 251, rue Camille Godard, F-33000 Bordeaux (FR)**

(74) Mandataire: **Bloch, Robert et al, 6, rue du Faubourg Saint-Honoré, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La présente invention concerne les dispositifs destinés à transporter des objets d'une station de traitement à une autre, les opérations effectuées aux deux stations étant distinctes et complémentaires et exigeant des temps de traitement différents. C'est le cas notamment des opérations de remplissage et de bouchage des bouteilles.

Dans ce domaine d'application, on a été conduit à prévoir, à la station de remplissage, un carrousel muni d'une pluralité de supports de bouteilles et animé d'un mouvement de rotation continu, pour éviter notamment les mouvements d'oscillation du liquide en surface des bouteilles, et des moyens de transfert commodes des récipients du carrousel à un poste fixe de bouchage.

Un dispositif de ce type est connu et a été commercialisé par les Etablissements Larrieu-Bedin (France). Il comporte une chaîne, ou transporteur, sans fin sur laquelle reposent libres, entre des taquets poussoirs fixés à la chaîne, des supports de récipients qui, après être passés sous les becs de remplissage, ou tirage, sont acheminés par la chaîne sous le poste unique de bouchage. Ce poste de bouchage occupant une position fixe et la chaîne porteuse des supports étant animée d'un mouvement continu, un moyen élévateur soulève le support porteur d'un récipient rempli quand il passe sous l'organe de bouchage et le redépose, après bouchage, dans l'espace libre existant entre le taquet qui le poussait et le support précédent.

On voit que, dans ce dispositif connu, les supports doivent être écartés d'au moins un support, c'est-à-dire que les postes de tirage doivent être écartés au moin du double de ce qui est nécessaire pour la seule opération de tirage. De ce fait, la vitesse d'entraînement de la chaîne est deux fois plus forte que nécessaire et surtout l'augmentation des distances entraîne une augmentation des dimensions des pièces associées, par exemple, des cuves de tirage, donc une augmentation des coûts de fabrication.

La présente invention vise à supprimer ces inconvénients, et elle a pour objet un dispositif du type connu, c'est-à-dire comprenant une première chaîne, ou transporteur, sans fin animée d'un mouvement continu, suivant une première trajectoire correspondant aux postes de travail d'une première station de traitement, une pluralité de supports destinés à recevoir chacun un objet à traiter et reposant libres sur la dite première chaîne, des taquets fixés à ladite première chaîne de façon à exercer une poussée sur les dits supports et les entraîner aux moments opportuns sur cette première trajectoire, des moyens de guidage agencés pour faire suivre successivement aux dits supports une seconde trajectoire allant d'une extrémité de sortie de la première trajectoire, passant à l'aplomb des postes de travail de la seconde station de traitement, puis revenant à l'autre extrémité d'entrée de la première trajectoire, des moyens d'entraînement des dits support sur cette seconde trajectoire et des moyens agencés pour prélever successivement, sur cette seconde trajectoire, les dits supports et les présenter aux postes de travail de la seconde station de traitement, puis les ramener sur cette seconde trajectoire dans les espaces restés libres, dispositif caractérisé par le fait qu'il comporte une seconde chaîne ou transporteur, sans fin, extérieure à la première chaîne, et animée d'un mouvement continu suivant ladite seconde trajectoire, dont une partie est confondue avec la première trajectoire des dits supports, des taquets étant fixés sur cette seconde chaîne pour assurer l'entraînement des dits supports sur cette seconde trajectoire, que la seconde chaîne est entraînée à une vitesse qui est sensiblement le double de la vitesse de la première chaîne et que les taquets de la première chaîne sont distribués à une distance les uns des autres, de l'ordre de grandeur du diamètre des supports alors que les taquets de la seconde chaîne sont écartés les uns des autres d'au moins deux fois ce diamètre.

A titre nullement limitatif, on a représenté au dessin annexé un exemple de réalisation d'un dispositif selon l'invention, dessin sur lequel:

- la figure 1 est une vue schématique en plan de l'ensemble du dispositif;
- la figure 2 est une vue à plus grande échelle d'un détail compris à l'intérieur du cercle II de la figure 1, et
- les figures 3a, 3b et 3c sont des vues de détail, à grande échelle, de trois positions successives des supports, à l'aplomb du poste de bouchage.

Dans l'exemple représenté, l'invention est appliquée à un appareil combiné de remplissage et bouchage de bouteilles. Le remplissage, ou tirage, s'opère sur un carrousel 1 (représenté comme une chaîne sans fin par un simple cercle), animé d'un mouvement de rotation continu, de vitesse périphérique $V_1$, sous des becs de tirage (non représentés). Sur cette chaîne 1 sont fixés des taquets 2 entre lesquels se logent des supports 3 qui reçoivent les bouteilles 4 à traiter. La distance entre les taquets 2 est ici légèrement supérieure au diamètre des supports 3. Ces supports reposent libres sur la chaîne 1 et sont entraînés, aux moments voulus, par poussée des taquets 2. Les supports échappent à la chaîne 1 à l'entrée de moyens de guidage 5, 6 entre lesquels ils sont poussés pour atteindre une seconde chaîne 7 sans fin, portant aussi des taquets entraîneurs 8, mais qui sont écartés les uns des autres d'une distance A égale à au moins deux fois le diamètre des supports 3. A la sortie des guides 5, 6, les supports 3 suivent une trajectoire fixée par un guide 9 au cours de laquelle les bouteilles 4 sont évacuées par l'action d'une pale 10 et rejoignent, guidées par la cloison 11, la bande transporteuse 12 de sortie.

La chaîne 7 suit, sur une partie de son parcours, la trajectoire imposée aux supports 3 par les guides 5 et 6, puis, sur la partie suivante, celle imposée par le guide 9 jusqu'à l'évacuation par la cloison 11 et elle suit ensuite un trajet, ici rectiligne, jusqu'au niveau d'un ensemble de guidage 13, 14 débouchant sur la chaîne 1. Le parcours de la chaîne 7 se poursuit par une trajectoire circulaire parallèle à celle de la chaîne 1 jusqu'à sa venue en prise avec une roue dentée 20 après laquelle elle reprend la trajectoire des guides 5 et 6. Cette chaîne 7 est entraînée à une vitesse $V_2$ qui est ici sensiblement le double de la vitesse $V_1$ de la chaîne 1.

Le poste de bouchage unique est situé à l'aplomb du moyen élévateur 21 dont le fonctionnement sera expliqué en détail plus loin.

Le fonctionnement de l'ensemble du dispositif qui vient d'être décrit est le suivant:

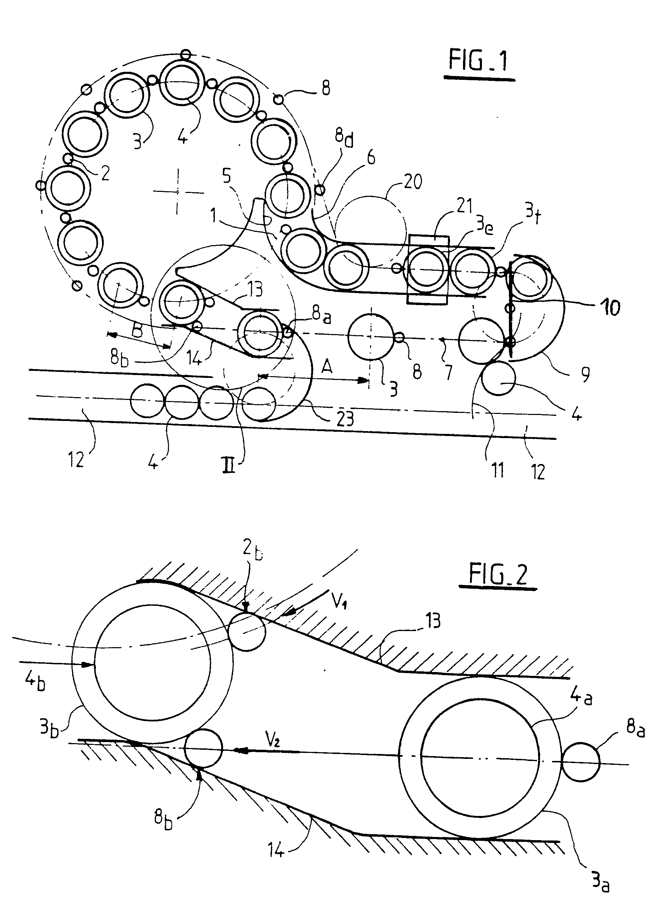

Les bouteilles 4 arrivant par le transporteur 12 sont dirigées au moyen d'une étoile de sélection et grâce au guide 23, vers l'entrée des guides 13, 14 où elles retrouvent, successivement, chacune, un support 3 amené sur la chaîne 7 par poussée d'un taquet. Comme on le voit sur la figure 2, ce taquet 8a pousse le support 3a jusqu'à ce qu'il vienne occuper la position 8b où le support 3b arrive sur la chaîne 1 et qu'un taquet 2 vienne en butée contre lui et l'entraîne sur la chaîne 1.

Les supports 3 et leurs bouteilles respectives suivent avec la chaîne 1 la trajectoire qui les fait passer sous les becs de remplissage tournant avec eux et sont évacués de la chaîne 1 par les guides 5, 6, chaque support 3c étant poussé par le support suivant 3d, ils parviennent sur la chaîne extérieure 7 où ils sont pris successivement en charge par le taquet 8c et occupent successivement les positions 3e puis 3f. Sous la position occupée par le support 3e sur la figure 1, est disposé, à l'aplomb de l'organe de bouchage (non représenté), un élévateur 21.

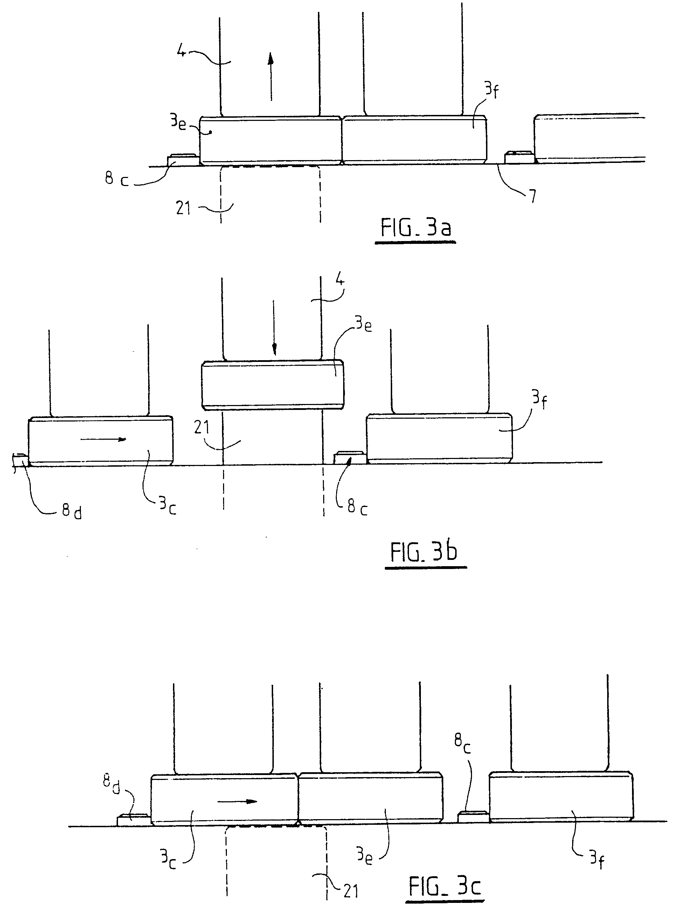

Comme on le voit sur la figure 3a, dans cette position, l'élévateur 21 soulève le support 3e et sa bouteille, et l'amène dans la position de la figure 3b. Dans cette position, la bouteille 4 subit l'opération de bouchage. Il existe alors un intervalle libre entre le taquet 8c et le support précédent 3c et l'élévateur 21 peut laisser revenir le support 3e sur la chaîne 7 après bouchage, comme indiqué sur la figure 3c.

Après bouchage, les supports suivent le guide 9 et la pale tournante 10 écarte la bouteille de son support porteur et, déviée par le guide 11, parvient sur la bande transporteuse 12 pour être entraînée vers le poste de traitement suivant.

Le support, libéré de sa bouteille, poursuit son chemin, poussé par le taquet associé et parvient à l'entrée des moyens de guidage 13, 14. Il reçoit alors une bouteille 4a, arrivant de la bande transporteuse 12 et guidée par le guide 23. Le taquet 8a pousse le support et sa bouteille jusqu'à ce qu'il parvienne à la position 3b d'où il est placé sur la chaîne 1 et pris en charge par le taquet 2b de cette chaîne.

Le cycle des traitements se déroule pour cette nouvelle bouteille comme indiqué précédemment.

## Revendication

Dispositif de transport d'objets entre deux stations de traitement, exigeant des temps de traitement différents, en particulier de remplissage et de bouchage de bouteilles, du type comprenant une première chaîne, ou transporteur, sans fin, animée d'un mouvement continu, suivant une première trajectoire sans fin (1) correspondant aux postes de travail d'une première station de traitement, une pluralité de supports (3) destinés à recevoir chacun un objet (4) à traiter et reposant libres sur la dite première chaîne, des taquets (2) fixés à la dite première chaîne de façon à exercer une poussée sur les dits supports (3) et les entraîner aux moments opportuns sur cette première trajectoire, des moyens de guidage (5, 6, 13, 14) agencés pour faire suivre successivement aux dits supports une seconde trajectoire (7) allant d'une extrémité, de sortie, de la première trajectoire, passant à l'aplomb d'au moins un poste de travail fixe de la seconde station de traitement, puis revenant à l'autre extrémité, d'entrée, de la première trajectoire, des moyens d'entraînement des dits supports sur cette seconde trajectoire et des moyens (21) agencés pour prélever successivement, sur cette seconde trajectoire, les dits supports (3) et les présenter au dit poste de travail de la seconde station de traitement, puis les ramener sur cette seconde trajectoire dans les espaces restés libres entre supports, dispositif caractérisé par le fait qu'il comporte une seconde chaîne, ou transporteur, sans fin, extérieure à la première chaîne et animée d'un mouvement continu suivant ladite seconde trajectoire dont une partie est confondue avec la première trajectoire desdits supports (3), des taquets (8) étant fixés sur cette seconde chaîne de façon à assurer l'entraînement des dits supports sur cette seconde trajectoire, que la seconde chaîne est entraînée à une vitesse ($V_2$) qui est sensiblement le double de la vitesse ($V_1$) de la première chaîne et que les taquets de la première chaîne sont distribués à une distance les uns des autres, de l'ordre de grandeur du diamètre des supports alors que les taquets (8) de la seconde chaîne sont écartés les uns des autres d'au moins deux fois ce diamètre.

## Patentanspruch

Einrichtung zum Transport von Gegenständen zwischen zwei Bearbeitungsstationen, an denen die Bearbeitungsvorgänge zu unterschiedlichen Zeiten erfolgen, insbesondere zum Füllen und zum Verschliessen von Flaschen, mit einer ersten Endloskette oder einer ersten Endlosfördervorrichtung, die zu einer kontinuierlichen Bewegung entlang einer ersten endlosen Bewegungsbahn (1) angetrieben wird, die den Arbeitsstellen einer ersten Bearbeitungsstation zugeordnet ist, mit einer Vielzahl von Trägern (3), die zur Aufnahme jeweils eines zu bearbeitenden Gegenstandes (4) dienen und frei auf der genannten ersten Kette liegen, mit Mitnehmern (2), die derart an der ersten Kette angebracht sind, dass sie eine Schubkraft auf die Träger (3) ausüben und diese zu vorgegebenen Zeitpunkten auf der ersten Bewegungsbahn vorwärts bewegen, mit Führungsorganen (5, 6, 13, 14), die bewirken, dass die Träger aufeinanderfolgend einer zweiten Bewegungsbahn folgen, die sich an ein Ausgangsende der ersten Bewegungsbahn anschliesst, unterhalb mindestens einer ortsfesten Arbeitsstelle der zweiten Bearbeitungsstation vorbeiläuft und wieder zum Eingangsende der ersten Bewegungsbahn zurückkehrt, mit Mitnehmerelementen für die Träger entlang der zweiten Bewegungsbahn und mit Einrichtungen (21), um die Träger (3) auf dieser zweiten Bewegungsbahn aufeinanderfolgend zu erfassen und sie der Arbeitsstelle der zweiten Bearbeitungsstation zu präsentieren und anschliessend wieder auf die zweite Bewegungsbahn in die zwischen Trägern freigelassenen Zwischenräume zurückzuführen, dadurch gekennzeichnet, dass sie eine ausserhalb der ersten Kette befindliche zweite Endloskette oder Endlosfördervorrichtung aufweist, die kontinuierlich zu einer Bewegung entlang der zweiten Bewegungsbahn antreibbar ist, von der sich ein Abschnitt mit der ersten Bewegungsbahn der Träger (3) überlagert, wobei an dieser zweiten Kette Mitnehmer (8) befestigt sind, um die Mitnahme der Träger entlang der zweiten Bewegungsbahn sicherzustellen, dass die zweite Kette mit einer Geschwindigkeit (V₂) antreibbar ist, die doppelt so gross ist wie die Geschwindigkeit (V₁) der ersten Kette, und dass die Mitnehmer der ersten Kette in einem gegenseitigen Abstand in der Grössenordnung des Durchmessers der Träger angeordnet sind, während die Mitnehmer (8) der zweiten Kette in einem gegenseitigen Abstand voneinander liegen, der mindestens dem Zweifachen dieses Durchmessers entspricht.

### Claim

A device for transporting objects between two processing stations requesting different processing durations, in particular for filling and stoppering bottles, of the type comprising a first endless chain or transporter driven with a continuous movement along a first path (1) corresponding to the work posts of a first processing station, a plurality of supports (3) each intended to receive an object (4) to be processed and resting freely on said first chain, lugs (2) fixed to said first chain so as to exert a push on said supports (3) and drive them at appropriate moments along this first path, guide means (5, 6, 13, 14) adapted for causing said supports to follow successively a second path (7) going from an outlet end of the first path passing under at least one stationary work post of the second processing station then coming back to the other inlet end of the first path, means for driving said supports over said second path and means (21) adapted for successively taking said supports (3) from said second path and presenting them to said work post of the second processing station, then bringing them back to this second path in the spaces remaining free, characterized in that a second endless chain or transporter is provided, external to the first chain, and having a continuous movement along said second path a part of which merges with the first path of said supports (3), lugs (8) being fixed to said second chain for driving said supports over said second path, said second chain is moved at a speed (V₂) which is about double of the speed (V₁) of the first chain and in that the lugs of the first chain are spaced apart at a distance from each other of the order of size of the diameter of the supports, whereas the lugs (8) of the second chain are spaced apart from each other by at least twice this diameter.

FIG.1

FIG.2

FIG. 3a

FIG. 3b

FIG. 3c